# FASCICULE DE BREVET EUROPEEN

(11) **EP 2 766 586 B1**
(45) Date de publication et mention de la délivrance du brevet: **18.10.2017**
(21) Numéro de dépôt: 12773087.7
(22) Date de dépôt: 26.09.2012
(51) Int. Cl.: F02B 37/013, F02B 37/04, F02B 39/10, F02D 13/06, F02D 17/00, F02D 41/00

(54) **MOTEUR SURALIMENTE PAR TURBOCOMPRESSEUR EQUIPE DE MOYENS DE REDUCTION DU TEMPS D'ACTIVATION DU TURBOCOMPRESSEUR**
Durch einen Turboverdichter aufgeladene Brennkraftmaschine mit einem Mittel zur Verringerung der Aktivierungszeit des Turboverdichters
ENGINE SUPERCHARGED BY A TURBOCOMPRESSOR PROVIDED WITH A MEANS FOR REDUCING THE TIME REQUIRED TO ACTIVATE THE TURBOCOMPRESSOR

(30) Priorité: 27.09.2011 FR 1158647
(43) Date de publication de la demande: 20.08.2014
(73) Titulaire: Valeo Systèmes de Contrôle Moteur, 95800 Cergy (FR)
(72) Inventeur: LUTZ, Philippe, F-78100 Le Vesinet (FR); POTTEAU, Sébastien, F-78510 Triel Sur Seine (FR); MENEGAZZI, Pascal, F-78500 Sartrouville (FR)
(74) Mandataire: Garcia, Christine
(86) Numéro de dépôt international: PCT/FR2012/052152
(87) Numéro de publication internationale: WO 2013/045821

(56) Documents cités:
- EP-A2- 2 267 291
- WO-A2-2008/095129
- DE-A1- 19 831 251
- DE-A1-102008 049 091
- US-A1- 2007 074 513
- US-B1- 6 273 076

## Description

L'invention apporte une solution pour réduire le temps d'activation d'un turbocompresseur équipant un moteur thermique tel qu'un moteur à essence.

### ARRIERE PLAN DE L'INVENTION

Dans un moteur thermique suralimenté par un turbocompresseur, l'enclenchement du turbocompresseur est provoqué de manière automatisée lorsque certaines conditions de fonctionnement et de charge sont réunies. Typiquement, le turbocompresseur est enclenché lorsque la puissance mécanique demandée au moteur est supérieure à une valeur seuil, et que le régime du moteur est suffisamment élevé.

D'une manière générale, le fonctionnement correct de la turbine du turbocompresseur requiert notamment que la pression en entrée de cette turbine soit suffisamment élevée.

Ainsi, lorsque l'activation du turbocompresseur est commandée, par exemple par enfoncement de la pédale d'accélérateur, il s'écoule d'abord un temps correspondant à un régime transitoire, pendant lequel la pression augmente à l'entrée de la turbine pour provoquer la mise en rotation de la turbine.

Compte tenu de la nécessité de cette montée en pression, le temps d'activation du turbocompresseur est d'autant plus élevé que le régime de rotation du moteur thermique est faible : la montée en pression est conditionnée par le débit des gaz d'échappement qui sont produits par le moteur.

Ainsi, lorsque la puissance mécanique demandée au moteur augmente pour déclencher le turbocompresseur alors que le régime du moteur est relativement bas, par exemple 2000 tours par minute, le temps d'activation effective du turbocompresseur peut être de l'ordre de une à deux secondes.

Comme on le comprend, un temps d'activation aussi long est très pénalisant en termes de conduite puisque la demande de puissance qu'effectue le conducteur en enfonçant la pédale d'accélérateur se traduit par une augmentation effective de puissance mécanique, uniquement une à deux secondes après enfoncement de la pédale d'accélérateur.

### OBJET DE L'INVENTION

Le but de l'invention est de proposer une solution pour remédier à cet inconvénient.

### RESUME DE L'INVENTION

A cet effet, l'invention a pour objet un moteur thermique selon la revendication 1. L'invention concerne également un moteur tel que défini ci-dessus, comportant en outre une supercapacité pour alimenter électriquement le compresseur annexe pendant un intervalle de temps prédéterminé.

### DESCRIPTION DETAILLEE DE L'INVENTION

L'idée à la base de l'invention est de prévoir un compresseur annexe, sollicité temporairement durant l'enclenchement du turbocompresseur. Ce compresseur annexe, qui est électrique, assure une suralimentation en air du moteur durant l'enclenchement du turbocompresseur, ce qui permet d'augmenter de façon quasi-instantanée la pression dans les cylindre, et par là même la pression et le débit des gaz d'échappement pour réduire le temps d'activation de la turbine du compresseur.

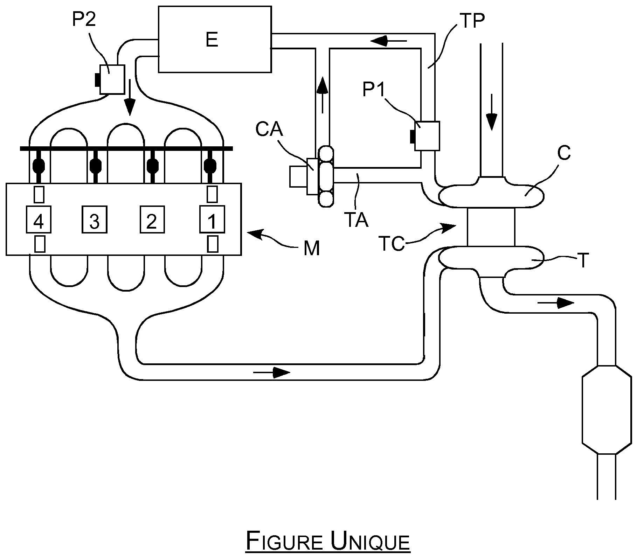

Dans la figure unique, on a représenté un exemple d'application de l'invention à un moteur M à quatre cylindres, repérés par 1 à 4. Ce moteur est suralimenté en air par un turbocompresseur TC, recevant les gaz d'échappement au niveau de sa turbine T pour les évacuer à l'échappement du véhicule via un catalyseur. Ce turbocompresseur TC reçoit l'air atmosphérique en entrée de son compresseur C, de manière à fournir le moteur M en air comprimé de suralimentation.

Comme visible dans la figure, un échangeur de chaleur E est interposé entre le compresseur C et le répartiteur d'admission du moteur, de manière à abaisser la température de l'air comprimé de suralimentation, avant admission dans le moteur.

Complémentairement, deux papillons ou vannes sont prévus, l'une, repérée par P1, située entre le compresseur C et l'échangeur de chaleur E, l'autre, repérée par P2 étant située entre l'échangeur de chaleur E, et le répartiteur d'admission du moteur M.

Concrètement, lorsque le turbocompresseur est activé, le papillon P1 est ouvert pour laisser passer l'air en provenance du compresseur C, le papillon P2 étant alors fermé. Lorsque le turbocompresseur n'est pas activé, le papillon P1 est fermé pour bloquer le turbocompresseur, et le papillon P2 est ouvert pour autoriser l'admission d'air atmosphérique vers le répartiteur d'admission.

Les quatre cylindres 1 à 4 sont ici alimentés en carburant par un système d'injection, et deux de ces cylindres, à savoir les cylindres 1 et 4 sont équipés de moyens permettant de les désactiver, en agissant par exemple sur leurs dispositifs d'injection respectifs.

Selon l'invention, le moteur est encore équipé, additionnellement au turbocompresseur TC, d'un compresseur annexes repéré par CA, et qui est prévu pour fonctionner temporairement lors de l'enclenchement du turbocompresseur.

Ce moteur comporte encore un ensemble de moyens de commande, non représentés, qui assurent l'enclenchement du système de suralimentation, et qui sont ici aptes à agir sur les papillons P1 et P2, ainsi que sur le compresseur annexe CA, et sur les moyens d'activation et de désactivation des cylindres repérés par 1 et 4.

Le compresseur C est relié à l'échangeur E par une tubulure principale, repérée par TP, sur laquelle est monté le papillon P1. Le compresseur annexe CA équipe une tubulure annexe repérée par TA, distincte de la tubulure principale TP et qui relie elle aussi la sortie du compresseur C à l'entrée de l'échangeur E.

Ce compresseur est un compresseur électrique, apte à être mis en service en un temps très court, par exemple de l'ordre de quelques dizaines de microsecondes. Avantageusement, ce compresseur électrique annexe CA est alimenté électriquement par l'intermédiaire d'un condensateur non représenté, ou supercapacité, lui-même alimenté électriquement par l'alternateur ou alterno-démarreur non représenté, équipant le groupe motopropulseur.

L'enclenchement du système de suralimentation est piloté par le système de commande non représenté, typiquement lors d'une demande de puissance mécanique par le conducteur enfonçant la pédale d'accélérateur du véhicule.

Dans ce cas, le système de commande active temporairement le compresseur annexe CA, et il agit sur les papillons P1 et P2 pour les configurer de manière à solliciter le turbocompresseur TC.

Dans ces conditions, l'air sortant du compresseur C, mais qui est alors uniquement faiblement comprimé, est comprimé par le compresseur annexe CA, ce qui permet d'alimenter en air de suralimentation le répartiteur d'admission. A ce stade, les cylindres du moteur sont suralimentés, du fait qu'ils reçoivent de l'air sous pression, de sorte qu'ils produisent des gaz d'échappement ayant une pression et une température supérieures.

Cet accroissement rapide de la pression des gaz d'échappement a pour effet de réduire significativement le temps d'activation de la turbine T du turbocompresseur TC, qui se trouve alors alimentée par des gaz d'échappement chauds ayant une pression élevée. L'activation du turbocompresseur est ainsi obtenue rapidement : la durée de son régime transitoire est significativement réduite par l'augmentation rapide de la pression en entrée de sa turbine.

Le compresseur annexe est désactivé par le système de commande au bout d'une durée prédéterminée, et/ou lorsque le turbocompresseur a atteint un régime permanent. Durant la phase d'enclenchement, c'est-à-dire pendant que le compresseur annexe est activé, le système de commande désactivé également les cylindres 1 et 4. Les cylindres moteurs 2 et 3 sont alors plus fortement chargés, ce qui optimise le rendement du moteur et produit des gaz d'échappement plus chauds favorisant une montée encore plus rapide du régime de la turbine T. La désactivation d'un ou plusieurs cylindres durant l'activation temporaire du compresseur annexe permet en outre d'utiliser un compresseur annexe moins puissant.

Dans l'exemple des figures, le moteur utilisé comporte quatre cylindres, mais l'invention s'applique aussi bien à un moteur comportant tout autre nombre de cylindres. Le nombre de cylindres pouvant être désactivés durant l'activation temporaire du compresseur annexe est conditionné, d'une manière générale par les caractéristiques du moteur.

## Revendications

1. Moteur thermique (M) équipé d'un système de suralimentation par turbocompresseur (TC), et de moyens de commande pour enclencher ce système de suralimentation (TC), **caractérisé en ce que** le système de suralimentation comporte, additionnellement au turbocompresseur (TC), un compresseur annexe (CA) du type électrique apte à suralimenter en air le moteur (M), et **en ce que** les moyens de commande sont agencés pour :
- activer temporairement le compresseur annexe (CA) lors de l'enclenchement du système de suralimentation (TC), et
- désactiver un ou plusieurs des cylindres (1, 4) du moteur (M) durant l'activation temporaire du compresseur annexe (CA),
- désactivé le compresseur annexe (CA) au bout d'une durée prédéterminée, et/ou lorsque le turbocompresseur a atteint un régime permanent.

2. Moteur thermique selon la revendication précédente, comportant en outre une supercapacité pour alimenter électriquement le compresseur annexe (CA) pendant un intervalle de temps prédéterminé.

## Patentansprüche

1. Verbrennungsmotor (M), der mit einem System zur Aufladung durch einen Turbolader (TC) und Steuermitteln zum Zuschalten des Aufladungssystems (TC) ausgestattet ist, **dadurch gekennzeichnet, dass** das Aufladungssystem zusätzlich zu dem Turbolader (TC) einen elektrischen Hilfsverdichter (CA), der zur Luftaufladung des Motors (M) in der Lage ist, umfasst und dass die Steuermittel zu Folgendem angeordnet sind:
- zeitweiligem Aktivieren des Hilfsverdichters (CA) beim Zuschalten des Aufladungssystems (TC) und
- Deaktivieren eines oder mehrerer Zylinder (1, 4) des Motors (M) während der zeitweiligen Aktivierung des Hilfsverdichters (CA),
- Deaktivieren des Hilfsverdichters (CA) zum Ende einer vorbestimmten Zeitdauer und/oder wenn der Turbolader Dauerbetrieb erreicht hat.

2. Verbrennungsmotor nach dem vorhergehenden Anspruch, der des Weiteren einen Superkondensator zur Stromversorgung des Hilfsverdichters (CA) während eines vorbestimmten Zeitintervalls umfasst.

## Claims

1. Heat engine (M) equipped with a turbocompressor (TC) supercharging system, and control means for engaging this supercharging system (TC), **characterized in that** the supercharging system comprises, in addition to the turbocompressor (TC), an additional compressor (CA) of electric type capable of supercharging the engine (M) with air, and **in that** the control means are arranged to:
- temporarily activate the additional compressor (CA) when the supercharging system (TC) is engaged, and
- deactivate one or more of the cylinders (1, 4) of the engine (M) during the temporary activation of the additional compressor (CA),
- deactivate the additional compressor (CA) at the end of a predetermined time, and/or when the turbocompressor has reached a steady state.

2. Heat engine according to the preceding claim, further comprising a supercapacitor for electrically powering the additional compressor (CA) for a predetermined time interval.
